# EUROPÄISCHE PATENTANMELDUNG

(11) **EP 1 929 907 A2**
(43) Veröffentlichungstag der Anmeldung: **11.06.2008**
(21) Anmeldenummer: 07023368.9
(22) Anmeldetag: 03.12.2007
(51) Int. Cl.: A47J 37/04

(54) **Vorrichtung zum kontinuierlichen, gleichmässigen Grillen und/oder Garen von Fleisch und/oder Fleischwaren**

(30) Priorität: 07.12.2006 DE 102006057778
(71) Anmelder: Koers, Ernst, 57392 Schmallenberg (DE)
(72) Erfinder: Koers, Ernst, 57392 Schmallenberg (DE)

(57) **Zusammenfassung**

Vorrichtung zum kontinuierlichen, gleichmäßigen Grillen und/oder Garen von Fleisch und/oder Fleischwaren mit nach Art eines Paternosters mit zumindest einem übereinander angeordneten Zahnradpaar an seitlichen Wärmequellen vorbei umlaufendes Kettenband, in das Haltestäbe eingefügt sind, die flache, senkrecht hängende, mit einzeln ,vorzugsweise über einander liegendem Grillgut gefüllte Güllkörbe tragen. Um mit einfachen Mitteln die Bedienbarkeit der Vorrichtung auch für unerfahrenes und kurzfristig angelerntes Bedienpersonal relativ narrensicher zu ermöglichen, ist vorgesehen, dass die Wärmequellen über Schalt- und Einstellelemente ein- und ausschaltbar sowie in ihrer Wärmeintensität einstell- und/oder regelbar sind, dass mittels der Schalt- und Einstellelemente zumindest eine Grill- oder Garintensitätstufe und zumindest eine Wamhalteintensitätsstufe einstellbar ist.

## Beschreibung

Die Erfindindung betrifft eine Vorrichtung gemäß des Oberbegriffes des Schutzanspruches 1.

Eine derartige Vorrichtung ist durch das DE 2 00 12 423 U1 bekannt. Bei dieser Vorrichtung ist das umlaufende als Doppelkettenband ausgebildete Kettenband um zwei senkrecht übereinander angeordnete Zahnradpaare geschlungen, so dass das sich in den in das Doppelkettenband eingehängten Grillgutkörben befindliche Grillgut umlaufend und bei der Aufwärtsbewegung von der einen Seite und bei der Abwärtsbewegung von der anderen Seite durch die Wärmequellen gegrillt, gebräunt und gegart wird. Eines der Zahnradpaare wird mittels eines motorischen Antriebs angetrieben, so dass die mit Grillgut gefüllten Grillgutkörbe hängend nach Art eines Paternosters in senkrechter Weise an den Wärmequellen vorbei geführt werden.

Diese Vorrichtung hat sich in der Praxis bereits bewährt. Es lassen sich von einer Person in einfacher Weise eine relativ hohe Stückzahl Grillgut schnell grillen und garen. Bei diesem in dieser Praxis eingesetzten Vorrichtung muss die jeweilige Grill- oder Garintensität sowie die Wamhalteintensität von Hand an einer einstellbaren Einstelleinrichtung eingestellt werden. Mit dieser Vorrichtung können nur erfahrenen Personen Fleischwaren grillen und garen.

Der Erfindung liegt die Aufgabe zugrunde, mit einfachen Mitteln die Bedienbarkeit der Vorrichtung auch für unerfahrenes und kurzfristig angelerntes Bedienpersonal relativ narrensicher zu ermöglichen.

Diese Aufgabe wird erfindungsgemäß durch die kennzeichnenden Merkmale des Anspruches 1 gelöst. Infolge dieser Massnahmen wird über das der Grill- oder Garintensitätstufe zugeordnete Schalt- und Einstellelement die Grill- und Garintensität und das der Wamhalteintensitätsstufe zu geordnete Schalt- und Einstellelement die Wamhalteintensität eingestellt. Hierdurch sind exakt definierte Temperaturen für die jeweilige Phase der Gar- oder Grillarbeit der Vorrichtung in einfachster Weise einzustellen.

Für die meisten Einsatzfälle ist es ausreichend, wenn mittels der Schalt- und Einstellelemente nur eine Grill- oder Garintensitätstufe und nur eine Wamhalteintensitätsstufe einstellbar ist. In diesem Fall können keine Einstellfehler gemacht werden. Es kann nur zwischen "Grillen/Garen" und "Warmhalten" umgeschaltet werden.

Eine sehr einfaches umschalten lässt sich dadurch verwirklichen, dass die Schalt- und Einstellelemente als Tastschalter ausgebildet sind.

Um die Vorrichtung auf verschiedene Fleischwaren jeweils optimal einstellen zu können, ist vorgesehen, dass die Höhe der Intensitäten der Grill- oder Garintensitätstufe und/oder der Wamhalteintensitätsstufe mittels einer Einstellvorrichtung einstellbar ist. Hierbei ist dann vorgesehen, dass diese Einstellelemente zusätzlich vorgesehen und nicht für das "normale" Bedienungspersonal in zugänglicher Weise bedienbar sind. Diese Elemente können mit einem Code versehen oder nur mit einem Schlüssel zugänglich sein.

Weitere Einzelheiten der Erfindung sind der Beispielsbeschreibung und den Zeichnungen zu entnehmen. Die Zeichnung zeigt
eine Vorrichtung zum kontinuierlichen, gleichmäßigen Grillen und/oder Garen von Fleisch und/oder Fleischwaren in der Vorderansicht und in Prinzipdarstellung.

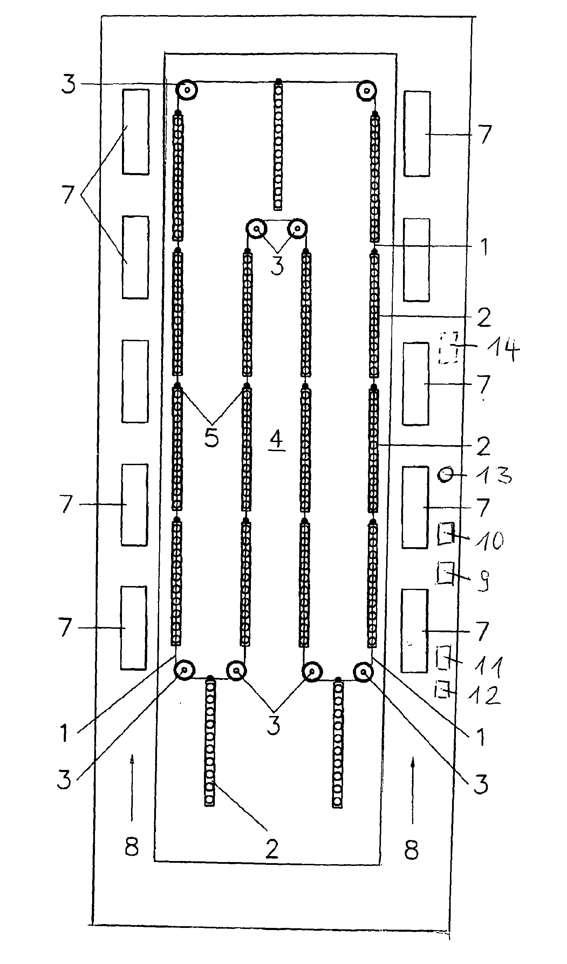

Die Vorrichtung zum kontinuierlichen, gleichmäßigen Grillen und/oder Garen von Fleisch und/oder Fleischwaren weist nach Art eines Paternosters an einer Doppelkette 1 angehängte Grillgutkörbe 2 auf. Die Doppelkette 1 ist über mehrere Zahnradpaare 3 zickzackförmig durch einen Grill- und Garraum 4 geführt. Die mehreren oberen und unteren Zahnradpaare 3 sind nebeneinander und beabstandet zueinander an einem nicht dargestellten Gestell drehbar gelagert. Die Ketten des Doppelkettenbandes 1 sind durch waagrechte Stäbe 5 miteinander verbunden. An diesen Stäben 5 sind die Grillgutkörbe 6 senkrecht hängend angehängt. Eines der Doppelzahnräder 3 wird von einem nicht dargestellten motorischen, vorzugsweise elektrischem Antriebsmittel in regelbarer Weise rotierend angetrieben. Hierbei wird das Doppelkettenband 1 über die Zahnradpaare 3 an seitlichen Wärmequellen 7 vorbei geführt. Die als elektrische Infrarotstrahler ausgebildeten Wärmequellen 7 sind in zwei senkrechten Reihen 8 seitlich des umlaufenden Doppelkettenbandes 1, in das Haltestäbe 5 eingefügt sind, an dem nicht dargestellten Gestell angeordnet. Wie vor bereits erwähnt sind die flachen, senkrecht hängenden, mit einzeln über einander liegendem Grillgut gefüllten Drahtkörbe 6 an den Haltstäben 5 anzuhängen. Das umlaufende Doppelkettenband 1 wird über die entsprechend angeordneten Doppelzahnräder 3 zickzackförmig umlaufend durch den Grill- und Garraum 4 geführt, wie Fig. 1 zeigt.

Im unteren Bereich lassen sich die Grillgutkörbe 6 mit dem zu grillenden Gut einhängen und mit dem fertig gegrillten Gut abhängen. Aufgrund des im Vergleich zum Stand der Technik schnell umlaufenden Doppelkettenbandes 1, jedoch mit einer langen Grill und Garstrecke, aufgrund der mehrfachen Durchführung des Grillgutes in zickzackförmiger Weise durch den Grill- und Garraum 4 durch den Strahlungsbereich der Wärmequellen 7 wird eine hohe Stückzahl von fertig gegrilttem Grillgut pro Zeiteinheit erreicht.

Die elektrischen Infrarotstrahler 7 sind an eine elektrische Spannungs- und Energieversorgung angeschlossen sowie mit einer elektrischen und/oder elektronischen Einstell- und/oder Regeleinrichtung 9, 10 zur Einstellung und/oder Regelung der Höhe der Intensitäten der Grill- oder Garintensitätstufe und/oder der Wamhalteintensitätsstufe der Strahler 7 ausgestattet.

Weiterhin sind die Strahler 7 über Schalt- und Einstellelemente 9, 10, 11 ein- und ausschaltbar sowie in ihrer Wärmeintensität einstell- und/oder regelbar sind. Mittels der Schalt- und Einstellelemente 9, 10 ist zumindest eine Grill- oder Garintensitätstufe und zumindest eine Wamhalteintensitätsstufe einstellbar ist.

Hierbei ist mittels der Schalt- und Einstellelemente 9, 10 nur eine Grill- oder Garintensitätstufe und nur eine Wamhalteintensitätsstufe einstellbar, wobei für die Grill- oder Garstufe das als Tastschalter 9 ausgebildete Schalt- und Einstellelement und die Warmhaltestufe das als Tastschalter 10 ausgebildete Schalt- und Einstellelement vorgesehen ist.

Durch einfaches Betätigen des jeweiligen Tastschalters 9, 10 wird die Höhe der Intensitäten der Grill- oder Garintensitätstufe für den Betrieb der Strahler 7 und/oder der Wamhalteintensitätsstufe für den Betrieb der Strahler 7 mittels einer elektrischen und/oder elektronischen Einstellvorrichtung eingestellt. Dies bedeutet, dass bei betätigen des Tastschalters 10 von der Betriebsart "Garen/Grillen" auf die Betriebsart "Warmhalten" und bei betätigen des Tastschalters 9 von der Betriebsart "Warmhalten" auf "Garen/Grillen" entsprechend umgeschaltet wird.

Hierbei kann eine einfache Temperaturkontrolle der elektrischen Keramik-Infrarotstrahler 7 mittels integrierter Thermoelemente geschehen.

Weierhin kann die linke und rechte Seite der Vorrichtung bei einer entsprechenden Anordnung von Einstellelementen 9, 10 gemeinsam und/oder separat eingestellt oder regelt werden.

In nicht dargestellter weise werden die Keramik-Infrarotstrahler 7 dabei durch Halbleiterrelais geschaltet, die im Spannungsdurchgang ein- und im Stromnulldurchgang ausschalten. Dadurch wird gewährleistet, dass Rückwirkungen auf das Stromversorgungsnetz vermieden werden.

Weiterhin sind auf der Bedienseite der Vorrichtung der Hauptschalter 11 zum ein- und ausschalten der Vorrichtung, ein als Tastschalter ausgebildetes Schaltelement 12 für das Starten und Stoppen der umlaufenden Kette 1 sowie ein Geschwindigkeitsregler 13 für die Umlaufgeschwindigkeit der Kette 1 angeordnet.

Um die Vorrichtung auf verschieden Fleischwaren jeweils optimal einstellen zu können, kann die mit gestrichelten Linien dargestellte Einstellvorrichtung 14 zusätzlich vorgesehen sein. Mittels dieser Einstellvorrichtung 14 lässt sich die Höhe der Intensitäten der Grill- oder Garintensitätstufe und/oder der Wamhalteintensitätsstufe einstellen. Diese Einstellvorrichtung ist zusätzlich vorgesehen und für das "normale Bedienungspersonal nicht bedienbar sind. Diese Vorrichtung 14 ist mit einem Code versehen oder nur mit einem Schlüssel zugänglich.

## Patentansprüche

1. Vorrichtung zum kontinuierlichen, gleichmäßigen Grillen und/oder Garen von Fleisch und/oder Fleischwaren mit nach Art eines Paternosters mit zumindest einem übereinander angeordneten Zahnradpaar an seitlichen Wärmequellen vorbei umlaufendes Kettenband, in das Haltestäbe eingefügt sind, die flache, senkrecht hängende, mit einzeln ,vorzugsweise über einander liegendem Grillgut gefüllte Grillkörbe tragen, **dadurch gekennzeichnet, dass** die Wärmequellen (7) über Schalt- und Einstellelemente (9, 10,11) ein- und ausschaltbar sowie in ihrer Wärmeintensität einstell- und/oder regelbar sind, dass mittels der Schalt- und Einstellelemente (9, 10) zumindest eine Grill- oder Garintensitätstufe und zumindest eine Wamhalteintensitätsstufe einstellbar ist.

2. Vorrichtung nach Anspruch 1, **dadurch gekennzeichnet, dass** mittels der Schalt- und Einstellelemente (9, 10) nur eine Grill- oder Garintensitätstufe und nur eine Wamhalteintensitätsstufe einstellbar ist.

3. Vorrichtung nach einem oder mehreren der vorstehenden Ansprüche, **dadurch gekennzeichnet, dass** die Schalt- und Einstellelemente als Tastschalter (9, 10) ausgebildet sind.

4. Vorrichtung nach einem oder mehreren der vorstehenden Ansprüche 1 bis 2, **dadurch gekennzeichnet, dass** die Höhe der Intensitäten der Grill- oder Garintensitätstufe und/oder der Wamhalteintensitätsstufe mittels einer Einstellvorrichtung (14) einstellbar ist.
